# EUROPEAN PATENT SPECIFICATION

(11) **EP 0 999 525 B1**
(45) Date of publication and mention of the grant of the patent: **05.04.2006**
(21) Application number: 98121208.7
(22) Date of filing: 06.11.1998
(51) Int. Cl.: G07D 7/00

(54) **Forgery resisting security document**
Fälschungssicheres Sicherheitsdokument
Document de sécurité résistant à la contrefaçon

(43) Date of publication of application: 10.05.2000
(73) Proprietor: Kyodo Printing Co., Ltd., Tokyo-to (JP)
(72) Inventor: Kobayashi, Fumihito c/o Kyodo Printing Co., Ltd., Tokyo (JP); Kitahara, Kiyoshi c/o Kyodo Printing Co., Ltd., Tokyo (JP); Koyama, Hiroshi c/o Kyodo Printing Co., Ltd., Tokyo (JP)
(74) Representative: Betten & Resch

(56) References cited:
- EP-A- 0 298 603
- EP-A- 0 732 844
- US-A- 4 501 439
- US-A- 4 892 385
- US-A- 5 826 916

## Description

### BACKGROUND OF THE INVENTION

The present invention relates to security documents (stocks and bonds etc.). especially to those which can be protected from forgery by color copiers, and even by personal computers, color printers and color scanners.

### Description of the Related Art

All sorts of security documents, which are defined here as including stock certificates, gift certificates, all kinds of tickets (i. e. bus tickets, train tickets, commutation tickets etc.) etc. are circulated and utilized for a variety of purposes. Naturally, since those security documents are regarded as economically valuable, it should be required that they are protected from being forged.

Considering the ways of preventing forgery with respect to security documents, for example, precision tint blocks etc. have been applied. However, forgeries have become dextrous these days with the progress of the printing technology. Furthermore, with the improvement of color copiers in their performance, forgeries of all kinds of security documents can now be produced by simply producing color copies thereof. As to other notable means of producing forgeries, there are high-performance personal computers, color printers, color scanners etc.. which can now be purchased with lower prices. Any printed material can be scanned by a color scanner, have its colors corrected by a personal computer, and have its imitation with such color correction applied thereto outputted from a color printer. Accordingly, it has become easier to produce copies of printed material which look closer to the original. Naturally, there is now a great demand toward an application of a more effective counter forgery measure with respect to security documents.

Regarding the ways of distinguishing the authenticity of any conventional security document such as stocks and bonds etc. by one's naked eye, in most cases the judgement is given on the basis of knowledge and experience of a person who is to judge the document. The materials to be judged would be a complicated pattern etc. printed on the document in question, and how precisely the complicated pattern etc. are being reproduced.

Accordingly, with respect to the conventional security documents, it is quite difficult for the general public to correctly distinguish the authenticity of the document.

Prior art document US-A-4892385 discloses an improved authenticating device comprising a substrate bonded to the sheet material, the substrate having a reflective diffractive structure formed as a relief pattern on a viewable surface thereof, and a transparent material covering the structure. Specified grating parameters of the diffractive structure, obtainable at low cost, result in peculiar, but easily discernable, optical color properties that cannot be copied by color copying machines. The necessity to correctly provide the reflective diffraction grating structure renders this prior art device rather complicated.

Prior art document EP-A-298603 discloses an iridescent lustrous composite which can simulate the appearance of mother-of-pearl comprising a substrate comprising a transparent or translucent plactic which has been pigmented with a metal oxide coated mica pigment and the substrate carries on at least one of its surfaces a transparent thermoplastic resinous laminate film of at least ten very thin and generally parallel layers of transparent thermoplastic resinous materials, the contiguous layers differing in refractive index by at least about 0.03 and in which the layer at each external surface of the laminate film has a thickness which is greater than the thickness of any one of the multiple very thin layers. This prior art document, however, does not disclose any possibility to use such a composite for security document applications.

### SUMMARY OF THE INVENTION

It is therefore an object of the present invention to provide security documents which are difficult to have their exact duplicates be made, and which are capable of having their authenticity be adequately and easily judged by the eyes of .the general public, thus capable of effectively preventing forgery by personal computers, color printers, and color scanners. According to the invention, this object is achieved by a security document according to claim 1. Advantageous embodiments are defined in dependent claims.

According to a first aspect of the present invention, there is provided a security document with a pattern, the pattern containing scale pigment and being formed on a base material or on a coloring layer with a lightness (L*) defined by CIE LAB being within the range of 0-80 as a least requisite, preferably within the range of 0-45.

According to a second aspect of the present invention, there is provided a security document according to the first aspect, wherein the pattern is formed by an application of ink containing resin, solvent, and scale pigment at a ratio of 2-1 : 16-8 : 3-0.5 (weight parts).

According to a third aspect of the present invention there is provided a security document according to the first or the second aspect, wherein a particle size of the scale pigment is within the range of 1-150*µ*m, preferably within the range of 5-60*µ*m.

According to a fourth aspect of the present invention, there is provided a security document according to either one of the first to third aspects, wherein the ink with said proportion is directly printed on the base material or on the coloring layer.

According to a fifth aspect of the present invention, there is provided a security document according to either one of the first to fourth aspects, wherein the ink with said proportion is printed on the base material or on the coloring layer through a transparent or a semi transpareat resin layer.

According to a sixth aspect of the present invention, there is provided a security document according to either one of the first to fifth aspects, wherein the ink is printed to form a line with a width Within the range of 0.01-50mm as a least requisite, preferably within the range of 0.1-10mm.

According to a seventh aspect of the present invention, there is provided a security document according to either one of the first to sixth aspects, wherein the printed line contains a discrimination element being at least characters, graphics, codes etc., or any combination of the same.

According to an eighth aspect of the present invention, there is provided a security document according to either one of the first to seventh aspects, wherein the pattern is formed by at least either differentiating the distribution or truing up the orientating of the scale pigment.

According to a ninth aspect of the present invention, there is provided a security document according to the first aspect, wherein the pattern is formed by an application of ink containing the scale pigment mixed at a ratio of 1-50 weight %, preferably at a ratio of 5-30 weight %.

According to a tenth aspect of the present invention, there is provided a security document according to the ninth aspect, wherein a particle size of the scale pigment is within the range of 1-150*µ*m, preferably within the range of 5-60*µ* m.

According to an eleventh aspect of the present invention, there is provided a security document according to the ninth or the tenth aspect, wherein the ink with said proportion is directly printed on the base material or on the coloring layer.

According to a twelfth aspect of the present invention, there is provided a security document according to either one of the ninth to eleventh aspects, wherein the ink with said proportion is printed on the base material or on the coloring layer through a transparent or a semitransparent resin layer.

According to a thirteenth aspect of the present invention, there is provided a security document according to either one of the ninth to twelfth aspects, wherein the ink is printed to form a line with a width within the range of 0.01-50= as a least requisite, preferably within the range of 0.1-10mm.

According to a fourteenth aspect of the present invention, there is provided a security document according to either one of the ninth to thirteenth aspects, wherein the printed line contains a discrimination element being at least characters, graphics, codes etc.. or any combination of the same.

According to a fifteenth aspect of the present invention, there is provided a security document according to either one of the ninth to fourteenth aspects, wherein the pattern is formed by at least either distribution or orientating of the scale pigment.

### BRIEF DESCRIPTION OF THE DRAWINGS

The above and further objects and the novel feature of the invention will more fully appear from the following detailed description when the same is read in connection with the accompanying drawings, in which:
Fig. 1A is a view showing a main surface of a gift certificate in a first embodiment of the present invention where the security document is applied as a gift certificate;
Fig. 1B is a view showing a cross section of the gift certificate shown in Pig. 1A:
Fig. 2 is an enlarged view of a section U shown in Fig. 1A;
Fig. 3A is an enlarged view of a section P shown in Fig. 1A as it is viewed from a direction 7;
Pig. 38 is an enlarged view of a section P shown in Pig. 1A as it is viewed from a direction 8;
Fig. 4 is a schematic diagram showing a printing process of the documents shown in Figs. 1A. 1B, 5A, 5B, 7A and 7B :
Fig. 5A is a view showing a main surface of a train ticket in a second embodiment of the present invention where the security document is applied as a train ticket;
Fig. 5B is a view showing a back side of the ticket shown in Fig. 5A:
Fig. 6 is an enlarged view of a section A shown in Fig. 5B :
Fig. 7A is a view showing a main surface of a train ticket in a third embodiment of the present invention where the security document is applied as a train ticket:
Fig. 78 is a view showing a back side of the ticket shown in Fig. 7A:

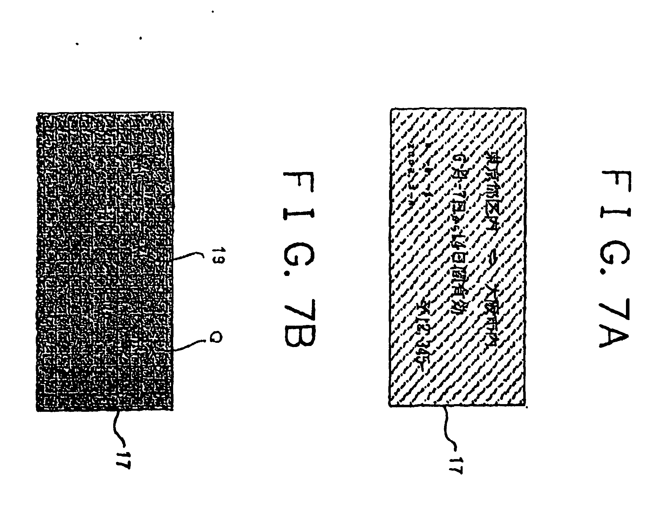

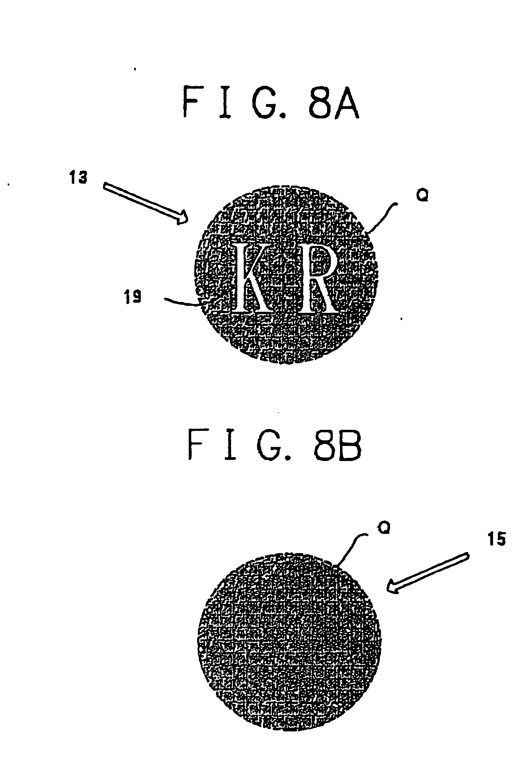

Fig. 8A is an enlarged view of a section Q shown in Fig. 7B, as it is viewed from a direction 13; and
Pig. 8B is an enlarged view of the section Q shown in Fig. 7B. as it is viewed from a direction 15.

### DESCRIPTION OF THE PREFERRED EMBODIMENTS

Referring now to the drawings, a description of preferred embodiments of the present invention will be given in detail.

Both Pig. 1A and Fig. 18 show a first embodiment of the present invention in which the security document is applied as a gift certificate.

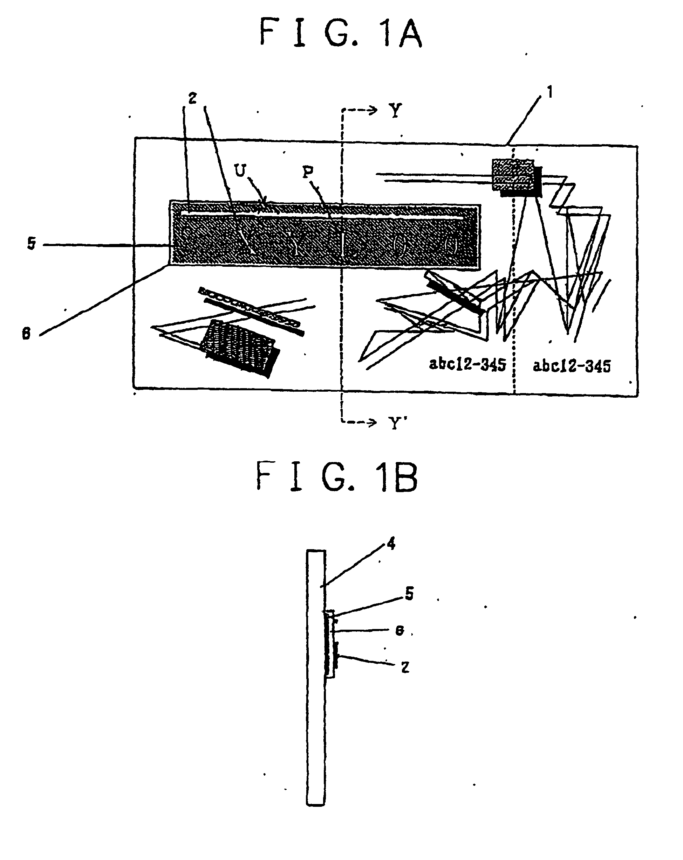

Fig. 1A shows a main surface of a gift certificate 1 and Pig. 1B shows a cross section of the gift certificate 1. On the main surface of the gift certificate 1. a linear pattern 2 is printed through a resin layer 6 on a coloring layer 5 provided on a base material 4. The pattern 2 is printed by ink in which resin, solvent and scale pigment are mixed. The coloring layer 5 has a lightness (L*) defined by CIE LAB (Commission Internationale de l'Eclairage L* a* b* ) being within the range of 0-80. preferably within the range of 0-45. The resin layer 6 should be either transparent or semitransparent. For instant, when the lightness (L*) is lower than 80 (gray), a recognizable change in hue of the pattern will be of the iridescence, depending on the visual angle the patter is viewed from.

According to CIE LAB, color can be defined by lightness (L*) and colorfulness (a* b*). According to an experiment conducted with respect to the present invention, a result has been obtained which indicates that as long as the lightness is maintained above a certain value, there will be no influence by the colorfulness (a* b*) will be cast upon.

The coloring layer 5 provided on a portion of the main surface of the gift certificate 1 shown in Fig. 1A, for example, can be formed at a thickness of about 2-3 *µ*m by applying offset ink such as RNC process ink sumi ("brand", Black color ink) etc. produced by T & K TOKA. Accordingly, the coloring layer 5 with the lightness (L') of about 50. which tones down the whiteness of a base paper, is made possible.

The resin layer 6 provided on the coloring layer 5 of the gift certificate 1 shown in Pig. 1A, for example, can be formed at a thickness of about 1-2*µ*m by dissolving phenol resin, alkyd resin, petroleum resin, vinyl resin, polyamide resin, polyester resin, acrylic resin, nitrocellulose, chlorinated rubber or chlorinated rubber mixture into an organic toluene or ketone solvent.

When pattern 2 is formed through the resin layer 6 on the coloring layer 5 having a lightness (L*) under a certain value, the ink of the pattern 2 will not filter through due to the resin layer 6, which causes uneven distribution of the scale pigment. Consequently, diffused reflection of light can be easily caused, which contributes to causing a conspicuous change in hue of the pattern 2.

The ink used for forming the pattern 2 includes a scaly (squamose or flake) pigment. As to the scale pigment, for instance, a pearl (nacreous or interference) pigment in which mica. e.g. Infinite color GG series (Shiseido Co.. Ltd.). Iriodin 200, 500 series (Merck Japan Limited), is covered by titanium dioxide is used. It is preferred that the particle size of the scale pigment to be used is within the range of 1-150 *µ*m, although 5-60*µ*m is the best condition. The average particle size of the scale pigment being 10-30*µ*m is most adequate.

As to a resin contained in the ink forming the pattern 2, for example, the resin materials used for the resin layer 6 can be applied. For Instance, a mixture of polyvinyl chloride acetate resin and polyester resin at a 1 : 1 ratio can be used.

Further, although transparency is not a requisite to the resin contained in the ink forming the pattern 2. it is still preferable that a high transparency resin without color is used as a binder, since characters, graphics, codes and so forth are embodied due to reflection and absorption of light.

With respect to a solvent contained in the ink forming the pattern 2, a mixture of methyl ethyl ketone (MEK) and toluene at a 1 : 1 ratio is used.

The mixture ratio (weight %) of the resin, solvent and the scale pigment, for instance, is set at 3 : 17 : 2.

An example of the present embodiment will be shown in the following.

The coloring layer 5 is formed at a thickness of about 2-3*µ*m by offset printing applying RNC process ink sumi ("brand", Black color ink) produced by T & K TOKA.

The resin layer 6 is formed to cover the coloring layer 5. A specific ink composition and printing conditions in case of forming the resin layer 6 by gravure will be given in the following.

The ink composition for the resin layer 6 is as follows.

| | |
|---|---|
| Polyvinyl chloride acetate resin: | 10 weight parts |
| (VAGH (brand), made by Union Carbide Japan KK) Polyester resin: | 10 weight parts |
| (Polyester 9500 (brand), made by Toyobo Co., Ltd.) Methyl ethyl ketone (MEK): | 60 weight parts |
| Toluene: | 60 weight parts |

The printing conditions are as follows.

| | |
|---|---|
| Ink viscosity: (a cup flow figure taken by No. 3 Zahn cup (fluid viscometer)) | 16 seconds |
| Print speed: | 30m/min |
| Drying temperature: | 90°C |
| Doctor blade pressure: | 2.0kgf/cm² |
| (internal pressure of an air cylinder) | |
| Printing pressure: | 2.0kgf/cm² |
| (internal pressure of an air cylinder) | |

Next a specific ink composition and printing conditions in case of forming the pattern 2 by gravure will be given in the following.

The ink composition for gravure is as follows.

| | |
|---|---|
| Polyvinyl chloride acetate resin: (VAGH (brand), made by Union Carbide Japan KK) | 10 weight parts |
| Polyester resin: (Polyester 9500 (brand), made by Toyobo Co., Ltd.) | 10 weight parts |
| Methyl ethyl ketone (MEK): | 60 weight parts |
| Toluene: | 60 weight parts |
| Pearl pigment (particle size: 10-60*µ*m): (Iriodin 219 produced by Merck Japan Limited) | 15 weight parts |

The printing conditions are as follows.

| | |
|---|---|
| Ink viscosity: | 16 seconds |
| (a cup flow figure taken by No. 3 Zahn cup) | |
| Print speed: | 30m/min |
| Drying temperature: | 90°C |
| Doctor blade pressure: | 2.0kgf/cm² |
| (internal pressure of an air cylinder) | |
| Printing pressure: | 2.0kgf/cm² |
| (internal pressure of an air cylinder) | |

In order to effectively bring out color alteration, fade-out effects etc. in printing by using such ink, it is preferable that the ink has a viscosity within the range of 12 to 30 seconds measured by the No.3 Zahn cup, although the best figure would be somewhere between 15 to 18 seconds. The range of ink viscosity, serving as a condition of maintaining the above effects, does not necessarily have to be measured by Zahn cup, but can be measured by other methods as long as they are capable of indicating a similar range of ink viscosity.

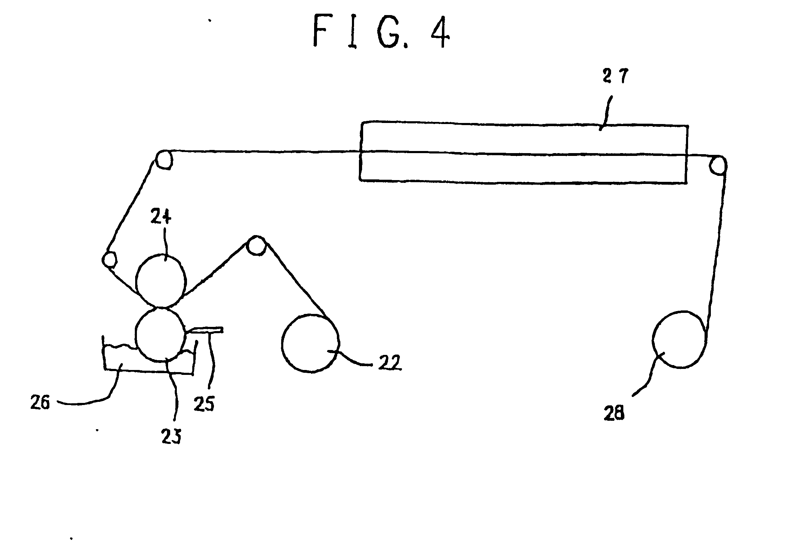

Fig. 4 shows by way of an example, a manufacturing process of the pattern 2 shown in Fig. 1A and Fig. 1B. in a single color by applying gravure.

First, a base material 4 sent out from a delivery roll 22 is passed in between a gravure cylinder 23 and an impression cylinder 24 in order to have gravure be applied thereto by gravure ink 26. A doctor blade 25 is for raking up the ink from the gravure cylinder 23. Then the gravure printed base material 4 is dried at the drying furnace 27, and collected by a take-up roll 28. Here the depth of cell of the gravure cylinder 23 should preferably be around 40-90 µ m.

According to the first embodiment, in order to achieve proper printing by using the ink with the above composition, silk screen can also be applied in stead of gravure. In these printing methods, print thickness can be managed with ease.

Although the printed pattern 2 is shown as having a linear form in Fig. 1A, it can be printed as other patterns as well. In order to achieve effective visual effects based upon one's visual angle, line width of the pattern 2 should preferably be a value within the range of 0.01-50mm, although it is most preferable that it is somewhere between 0.1-10mm.

In printing the pattern 2 on the surface of the gift certificate 1 by using the ink containing the scale pigment, uneven distribution of the scale pigment is caused within the pattern 2. Especially, there is a notable difference in the ink distribution between the center and the edges of the line in the longitudinal direction thereof. That is, the distribution of the scale pigment is greater in the center than it is in the edges. Therefore, the width of the pattern 2 is seen as changed for the scale pigment at the edges becomes invisible depending on one's visual angle. Furthermore hue of the pattern 2 seems as altered in the iridescence, for the color of the scale pigment changes depending on one's visual angle. Such visual alteration in width and color of the pattern 2 must be extremely difficult to imitate in forgeries. Thus, according to the present embodiment, the authenticity of the certificate 1 can be measured by judging such visual alterations in the pattern 2.

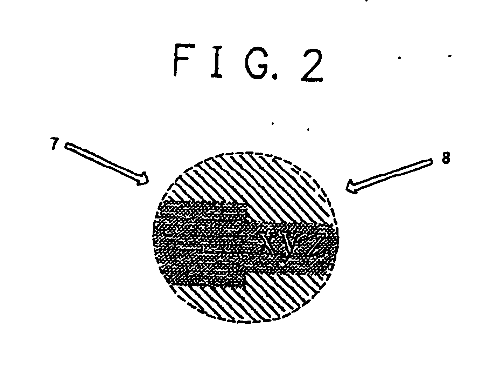

In Fig. 2. an enlarged view of a section U indicated as a discrimination element in Fig. 1A is presented. As shown in Fig. 2. a portion of the pattern 2 is supposed to look wider in viewing from a direction 7, while it is supposed to look narrower in viewing from a direction 8. In addition, in viewing the pattern 2 from the direction 8, characters "x y z" appear, while those characters would not be seen by viewing the pattern Z from the direction 7. In this case, distribution density of the scale pigment is arranged to become denser in the shape of "x y z" by curving the cell with a depth deeper by approximately 10% than the surrounding part. In this way, it is possible to print and form "x y z" such that it appears as standing out.

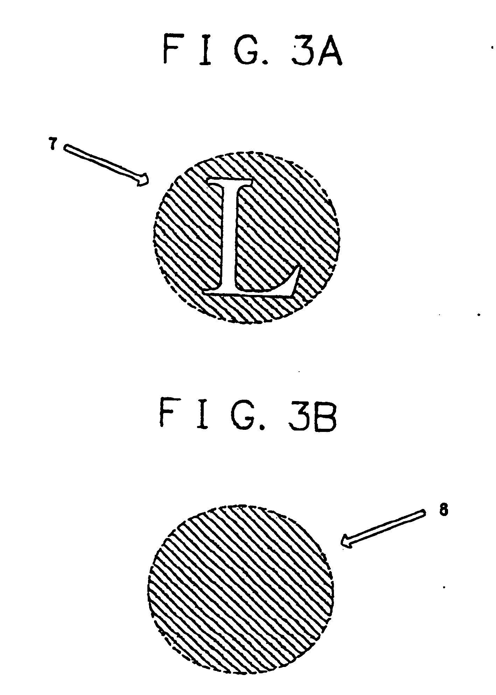

In Fig. 3A and Fig. 38, enlarged views of a section P indicated as a discrimination element in Fig. 1A is shown. As shown in Fig. 3A, when viewing from the direction 7, in a portion of the pattern 2, a character "L" can be viewed within a narrow pattern such that it appears as standing out. As shown in Pig. 3B, the portion of the pattern 2 is seen as having no pattern when viewed from the direction 8.

The directions 7 and 8 shown in Figs. 2. 3A and 3B are only mentioned to explain one example. Therefore, according to the present invention, it is quite possible that there are a variety of viewing directions from which the width, color etc. of the pattern can be seen differently suggesting that those directions are not limited to the directions 7 and 8.

To make sure, the discrimination element does not necessarily have to be characters as shown in Pig. 2 but can be any characters, graphics, etc. Further, the width of the pattern 2 is not limited to the width as shown in Fig. 18 but can be varied between 0.01-50mm, most desirably between 0.1-10mm.

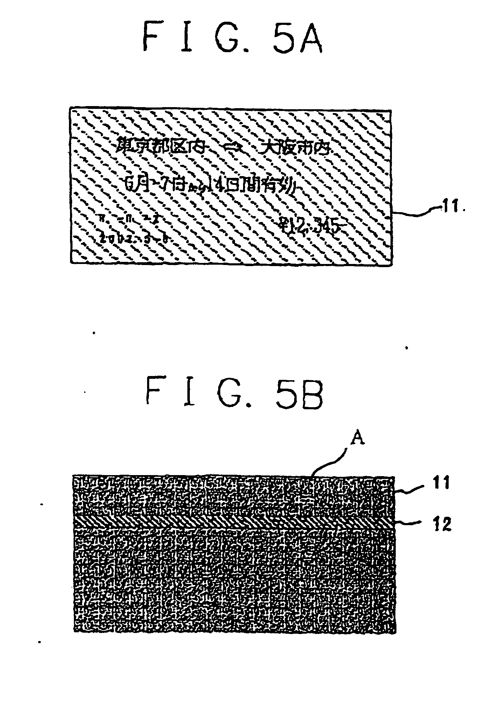

Next, a security document of a second embodiment of the present invention will be described with reference to Fig. 5A and Fig. 5B. Fig. 5A and Fig. 5B show a second embodiment of the present invention in which the security document is applied as a train ticket.

Fig. 5A shows a main surface of a train ticket 11 and Fig. 5B shows a back side of the train ticket 11. In Fig. 58, a linear pattern 12 is printed on the back side of the ticket 11. The lightness of the surface where the pattern 12 is printed should preferably be low with no luster. For example, it is preferred that the pattern 12 is directly printed on the magnetic recording layer.

For instance, when the pattern 12 is directly printed on the magnetic recording layer, the ink generally filters into the layer, which causes uneven distribution of scale pigment. Consequently, diffused reflection of light can be easily caused, which contributes to causing a color alteration effect etc.

The ink used for forming the pattern 12 includes a scaly (squamose or flake) pigment. As to the scale pigment, for instance, a pearl (nacreous or Interference) pigment is used. It is preferred that the particle size of the scale pigment to be used is within the range of 1-150*µ*m, although 5-60µm is the best condition. The average particle size of the scale pigment being 10-30 µm is most adequate.

As to a resin contained in the ink forming the pattern 12. for example, a mixture of polyvinyl chloride acetate resin and polyester resin at a 1 : 1 ratio is used.

Further, although transparency is not a requisite to the present invention, it is still preferable that a high transparency resin without color is used as a binder, since characters, graphics, codes and so forth are embodied due to reflection and absorption of light.

With respect to a solvent contained in the ink forming tne pattern 12, a mixture of methyl ethyl ketone (MEK) and toluene at a 1 : 1 ratio is used.

The mixture ratio (weight %) of the resin, solvent and the scale pigment, for instance, is set at 3 : 17: 2.

A specific ink composition and printing conditions in case of forming the pattern 12 by gravure will be given in the following.

The ink composition for gravure is as follows.

| | |
|---|---|
| Polyvinyl chloride acetate resin: | 10 weight parts |
| (VAGH (brand), made by Union Carbide Japan KK) | |
| Polyester resin: | 10 weight parts |
| (Polyester 9500 (brand), made by Toyobo Co., Ltd.) | |
| Methyl ethyl ketone (MEK): | 60 weight parts |
| Toluene: | 60 weight parts |
| Pearl pigment (particle size: 5-20*µ*m) ; | 15 weight parts |
| (Iriodio 520 produced by Merck Japan Limited) | |

The printing conditions are as follows.

| | |
|---|---|
| Ink viscosity: | 16 seconds |
| (a cup flow figure taken by No. 3 Zahn cup) | |
| Print speed: | 30m/min |
| Drying temperature: | 90°C |
| Doctor blade pressure: | 2.0kgf/cm² |
| (internal pressure of an air cylinder) | |
| Printing pressure: | 2.4kgf/cm² |
| (internal pressure of an air cylinder) | |

In order to effectively bring out color alteration etc. in printing by using such ink, it is preferable that the ink has a viscosity within the range of 12 to 30 seconds measured by the No. 3 Zahn cup, although the best figure would be somewhere between 15 to 18 seconds. The range of ink viscosity, serving as a condition of maintaining the above effects, does not necessarily have to be measured by Zahn cup, but can be measured by other methods as long as they are capable of indicating a similar range of ink viscosity.

A description of a manufacturing process of the pattern 12 in this embodiment will be omitted since it is the same as that explained with respect to pattern 2 shown in Figs. 1A and 1B.

According to the second embodiment also, in order to achieve proper printing by using the ink with the above composition, silk screen can also be applied in stead of gravure. In these printing methods, print thickness can be managed with ease.

Although the printed pattern 12 is shown as having a linear form in Fig. 58, it can be printed as other patterns as well. In order to achieve effective visual effects based upon one's visual angle, line width of the pattern 2 should preferably be a value within the range of 0.01-50mm, although it is most preferable that it is somewhere between 0.1-10mm.

In printing the pattern 12 on the back side of the ticket 11 by using the ink containing the scale pigment, uneven distribution of the scale pigment is caused within the pattern 12. Especially, there is a notable difference in the ink distribution between the center and the edges of the line in the longitudinal direction thereof. That is, the distribution of the scale pigment is greater in the center than it is in the edges. Therefore, the width of the pattern 12 is seen as changed for the scale pigment at the edges becomes invisible depending on one's visual angle. Furthermore, the color of the pattern 12 seems as altered for the color of the scale pigment changes depending on one' s visual angle. Such visual alteration in width and color of a pattern must be extremely difficult to imitate in forgeries. Thus, according to the second embodiment, the authenticity of the ticket 11 can be measured by judging such alterations in the pattern 12.

Further, the lightness (L*), defined by CIE LAB, of a background of the pattern 12 is required to be within the range of 0-80 in order to effectively view the above-described changes in the pattern 12. It is more preferable, however, that the lightness is within the range of 0-45. This is mostly because those changes in the pattern 12 would be hard to recognize if the background is too bright, i.e. when the lightness is too large a value.

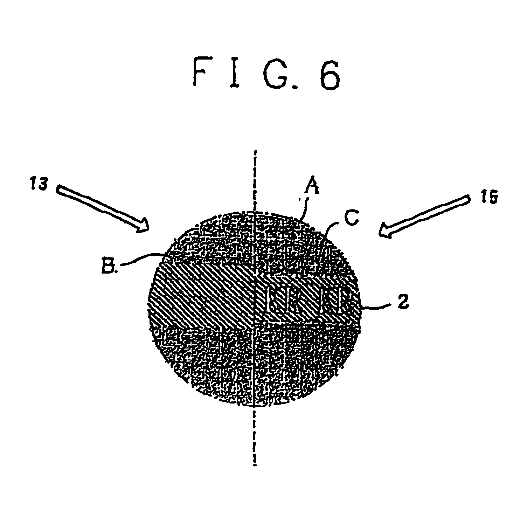

In Fig. 6. an enlarged view of a section A indicated as a discrimination element in Pig. 5B is shown. In Fig. 6. a portion of the pattern 2 looks wider in viewing from a direction 13 as Indicated in B. while the portion looks narrower In viewing from a direction 15 as indicated in C. In addition, in viewing the pattern 12 from the direction 15, characters "KR" appear, while those characters would not be seen by viewing the pattern 12 from the direction 13. In this case, distribution density of the scale pigment is arranged to become denser in the shape of "KR" by curving the cell with a depth deeper by approximately 10% than the surrounding part. In this way, it is possible to print and form "KR" such that it appears as standing out.

The directions 13 and 15 shown in Fig. 6 are only mentioned to explain one example. Therefore, according to the present invention, it is quite possible that there are a variety of viewing directions from which the width, color etc. of the pattern 12 can be seen differently.

To make sure, the discrimination element does not necessarily have to be characters as shown in Fig. 6 but can be any characters, graphics, etc. Further, the width of the pattern 12 is not limited to the width as shown in Fig. 58 but can be varied between 0.01-50mm, most desirably between 0.1-10mm.

For example, although the linear pattern 12 shown in Pig. 5B is only formed on a portion of the ticket 11, the pattern 12 can also be formed such that it covers the whole surface of the ticket 11.

Next, a security document according to a third embodiment of the present invention will be described with reference to Fig. 7A and Fig. 7B. In Fig. 7A and Fig. 7B, the security document of the present invention is shown as a train ticket.

Fig. 7A shows a main surface of a ticket 17 and Fig. 7B shows a back side of the ticket 17. Similarly to the second embodiment, in the third embodiment also, a character pattern 19 is printed on the back side of the ticket 17 as shown in Pig. 7B.

The ink used for forming the pattern 19 includes a scaly (squamose or flake) pigment. As to the scale pigment, for instance, a pearl (nacreous or interference) pigment is used. It is preferred that the particle size of the scale pigment to be used is between the range of 1-150*µ*m, although 5-60*µ*m is the best condition. The average particle size of the scale pigment being 10-30*µ*m is most adequate.

With respect to a resin contained in the ink forming the pattern 19. for example, a mixture of polyvinyl chloride acetate resin and polyester resin at a 1 : 1 ratio is used.

Furthermore, although transparency is not a requisite to the present invention, it is still preferable that a high transparency resin without color is applied as a binder, for characters, graphics, codes and so forth are embodied due to reflection and absorption of light.

As to a solvent contained in the ink forming the pattern 19, a mixture of methyl ethyl ketone (MEK) and toluene at a 1 : 1 ratio is used.

In the third embodiment, the percentage (weight %) of the scale pigment in the ink is within the range of 1-50 weight %, and preferably should be within the range of 5-30 weight %. This is different from the previous embodiment in which the mixture ratio (weight %) of the resin, solvent and the scale pigment is set at 3 : 17 : 2.

In the following, a specific ink composition and printing conditions In forming the pattern 19 by gravure will be given.

The ink composition for gravure is as set out below.

| | |
|---|---|
| Polyvinyl chloride acetate resin: | 10 weight parts |
| (VAGH (brand), made by Union Carbine Japan KK) | |
| Polyester resin: | 10 weight parts |
| (Polyester 9500 (brand), made by Toyobo Co. , Ltd.) | |
| Methyl ethyl ketone (MEK): | 65 weight parts |
| Toluene: | 65 weight parts |
| Pearl pigment (particle size: 10-60*µ*m) : | 15 weight parts |
| (Iriodin 500 produced by Merck Japan Limited) | |

The printing conditions are as set out below.

| | |
|---|---|
| Ink viscosity: | 15 seconds |
| (a cup flow figure taken by No. 3 Zahn cup) | |
| Print speed: | 200m/min |
| Drying temperature: | 120°C |
| Doctor blade pressure: | 2.0kgf/cm² |
| (internal pressure of an air cylinder) | |
| Printing pressure: | 3.0kgf/cm² |
| (internal pressure of an air cylinder) | |

A manufacturing process of the pattern 19 shown in Figs. 7A and 7B, by gravure is omitted since it is the same as that explained in the previous embodiments.

According to the third embodiment, in order to achieve proper printing by using the ink with the above composition, silk screen printing can also be applied in stead of gravure. In these printing methods, print thickness can be easily managed.

In printing the pattern 19 on the back side of the ticket 17 by using the ink containing scale pigment, uneven distribution of the scale pigment is caused within the pattern 19.

This means that the distribution of the scale pigment is greater in the center region than it is in its edges-Therefore, the width of the pattern 19 is seen as changed for the scale pigment at the edges become invisible depending on the angle they are viewed from. Furthermore, the color of the pattern 19 seems as altered for the color of the scale pigment changes depending on one's visual angle.

According to the third embodiment, creation of such visual effects represented by seeming alteration in width and color of the pattern highly depends on the amount (distribution rate) of the scale pigment which is present in the ink. Therefore, the percentage (weight %) of the scale pigment in the ink should not be of an arbitrary value, but has to be within the range of 1-50 wight %, or preferably within the range of 5-30 weight % if more conspicuous visual effects are desired.

Such seeming alteration in width and color, and a fade-out effect of the pattern 19 shown in Fig. 7B must be extremely difficult to duplicate in forgeries. Thus, according to the present embodiment, the authenticity of the ticket 17 can be measured by judging such alterations in the pattern 19.

Further, the lightness (L*), defined by CIE LAB. of a background of the pattern 19 should be within the range of 0-80 as in the case of the first and the second embodiments, in order to effectively view the above-described changes in the pattern 19. It is more preferable, however, that the lightness is within the range of 0-45. This is mostly because those changes in the pattern 19 with respect to its color and width would be difficult to be recognized and a fade-out effect would become weak, if the background becomes too bright, i.e. when the lightness is too large a value.

In Fig. 8A and Fig. 8B, enlarged views of a section Q indicated as a discrimination element in Fig. 7B is shown. As indicated in Fig. 8A, a portion of the pattern 19 is seen differently in color depending on one's viewing direction which is represented here by 13. As indicated in Fig. 8B, the portion of the pattern 19 is seen as being faded, almost as being completely invisible to the extent hardly distinguishable to one who views the pattern 19 from a direction 15.

With respect to the characters "KR" shown in Fig. 8A. which appears when viewing from the direction 13. the appearing and fade-out effects based upon the visual angle could become conspicuous when the weight % of the scale pigment in the ink is within the range of 1-50 weight %, or more preferably within the range of 5-30 weight %, and when the line width is within the range of 0.1-10mm.

The directions 13 and 15 shown in Fig. 8A and Fig. 8B are only mentioned to explain one example. Therefore, according to the present invention, it is quite possible that there are a variety of viewing directions from which the width, color etc. of the pattern can be seen differently.

According to the third embodiment also, the discrimination element does not necessarily have to be characters as shown in Fig. 8A but can be any characters, graphics, etc. or combination of the same.

In the following, a description will be given on the relationship between lightness, and hue alteration and area alteration effects with reference to Table 1.

Table I shows the presence of the hue alteration and area alteration effects according to the difference in lightness of a background.

**Table 1: the relation between the lightness of the background and the changing effect of hue and area**

| | | | | | | | | | | | |
|---|---|---|---|---|---|---|---|---|---|---|---|
| Lightness | 0 | 10 | 20 | 30 | 40 | 50 | 60 | TO | 80 | 90 | 100 |
| Effect | ○ | ○ | ○ | ○ | ○ | ○ | Δ | Δ | Δ | × | × |

- ○ :: both hue alteration and area alteration phenomena are observed
- Δ :: either hue alteration or area aeration phenomenon is observed
- × :: neither hue alteration nor area alteration phenomenon is observed

The hue alteration and area alteration phenomena occur by an interference phenomenon of light, and change according to the coating thickness of a titanium dioxide layer. The reason that the hue alteration and area alteration phenomena cannot be observed in case when an index of reflection is too high (in case of an interference color type like a series of Iriodin 200) is regarded as follows.
1. When the lightness of the background is high. i.e. when the index of reflection is high, a complementary color being a transmission component is reflected back agin by the background, such that it joins a reflection color component, which leads to decrease the color changing effect.
2. When the lightness of the background is low, i.e. when the index of reflection is low, the complementary color component is absorbed by a black color of the background, by which only the original reflection color can be observed.

Accordingly, because of such dichroism effect, the hue to be used for the background is an essential element which determines the effect for the whole.

As it has been made obvious in the above description, according to the present invention, the ink containing a scale pigment is used to print a certain pattern on the surface of the security document. The application of such ink causes uneven distribution of the scale pigment on the pattern. Consequently, a portion with less pigment distribution becomes invisible when it is viewed from a certain visual angle, which means that the printed pattern on the surface varies depending on the angle from which it is viewed. Therefore, in accordance with the present invention, it is possible to provide a security document of which authenticity can be easily determined.

According to the present invention, gravure is applied in printing the ink containing the scale pigment, by which print thickness can be properly managed. Moreover, by having the pattern line printed with a width within the range of 0.01-50mm, it becomes possible to expect effective visual effects with respect to the width and color alterations of the printed pattern line.

Furthermore, according to the present invention, since the weight percentage of the scale pigment in the ink is within the range of 1-50 weight %, or preferably within the range of 5-30 weight %, it is possible to expect conspicuous visual effects in which printed characters, graphics etc. in the pattern line with the width within the range of 0.01-50mm become invisible depending on the angle they are viewed. According to the present invention, therefore, it is possible to provide a security document with higher counter-forgery capabilities.

An experiment was conducted in producing a copy of a certain security document in which a transparent or semitransparent resin layer is formed in between the coloring layer and the pattern, The document was scanned by a scanner GT-9500 (made by EPSON), had its color corrected by a personal computer Power Mac 9600/233 (made by Apple), and had a copy with such color correction applied thereto outputted by a color printer PM-2000C (made by EPSON). In this experiment, it was possible to reproduce the printing elements, except for the pattern, with colors close to the original due to the color correction. However, as to the part where the transparent or the semitransparent resin layer is formed in between the coloring layer and the pattern, it was impossible to reproduce such visual, effect in which the pattern becomes invisible depending on the angle it is viewed from.

Even with an application of a high-performance color copiers, it is impossible to produce an exact duplicate of such security document which the present invention provides, while still maintaining the effects in which the printed characters graphics etc. on the document become invisible depending on the angle they are viewed from. Furthermore, even when the security document of the present invention is scanned by a scanner, had its color corrected by a personal computer, and had a copy with such color correction applied thereto outputted from a color printer, it is still impossible to expect such effects recognized in the present invention in which the printed characters, graphics etc. become invisible and the hue of the pattern alters in the iridescence depending on the angle the pattern is viewed from. According to the present invention, therefore, it is possible to provide a security document which is capable of effectively preventing forgery by not only color copiers, but also by high-performance personal computers, color printers, color scanners etc.

## Claims

1. A security document (1, 11, 17) with a pattern (2, 12), the pattern (2, 12) containing scale pigment and being formed on a base material (4) or on a coloring layer (5) which have a lightness (L*) defined by CIE LAB being within the range of 0-80.

2. A security document (1, 11, 17) according to claim 1, wherein said lightness (L*) is within the range of 0-45.

3. A security document (1, 11, 17) according to claim 1 or 2, wherein the pattern is formed by an application of ink containing resin, solvent, and scale pigment at a ratio of 2-1: 16-8 : 3-0.5 (weight parts).

4. A security document (1, 11, 17) according to any of claims 1 to 3, wherein a particle size of the scale pigment is within the range of 1-150 µm.

5. A security document (1, 11, 17) according to claim 4, wherein said particle size is within the range of 5-60 µm.

6. A security document (1, 11, 17) according to either one of claims 1 to 5, wherein the ink with said proportion is directly printed on the base material (4), or on the coloring layer (5).

7. A security document (1) according to either one of claims 1 to 6, wherein the ink with said proportion is printed on the coloring layer (5) through a transparent or a semitransparent resin layer (6).

8. A security document (1, 11, 17) according to either one of claims 1 to 7, wherein the ink is printed to form a line with a width within the range of 0.01-50 mm.

9. A security document (1, 11, 17) according to claim 8, wherein said line width is within the range of 0.1-10 mm.

10. A security document (1, 11, 17) according to either one of claims 1 to 9, wherein the printed line contains a discrimination element being at least characters, graphics, codes, or any combination of the same.

11. A security document (1, 11, 17) according to either one of claims 1 to 10, wherein the pattern is formed by at least either differentiating the distribution or truing up the orientating of the scale pigment.

12. A security document (1, 11, 17) according to claim 1, wherein the pattern is formed by an application of ink containing the scale pigment mixed at a ratio of 1-50 weight %, preferably at a ratio of 5-30 weight %.

13. A security document (1, 11, 17) according to claim 12, wherein a particle size of the scale pigment is within the range of 1-150 µm.

14. A security document (1, 11, 17) according to claim 13, wherein said particle size is within the range of 5-60 µm.

15. A security document (1, 11, 17) according to any one of claims 12 to 14, wherein the ink with said proportion is directly printed on the base material (4) or on the coloring layer (5).

16. A security document (1, 11, 17) according to either one of claims 12 to 15, wherein the ink is printed to form a line with a width within the range of 0.01-50 mm.

17. A security document (1, 11, 17) according to claim 16, wherein said line width is within the range of 0.1-10 mm.

18. A security document (1, 11, 17) according to either one of claims 12 to 17, wherein the printed line contains a discrimination element being at least characters, graphics, codes, or any combination of the same.

19. A security document (1, 11, 17) according to either one of claims 12 or 18, wherein the pattern is formed by at least either distribution or orientating of the scale pigment.

## Patentansprüche

1. Sicherheitsdokument (1, 11, 17) mit einem Muster (2, 12), wobei das Muster (2, 12) Schuppenpigment enthält und auf einem Basismaterial (4) oder auf einer Farbschicht (5) ausgebildet ist, das bzw. die eine durch CIE LAB definierte Helligkeit (L*) hat, die im Bereich von 0-80 liegt.

2. Sicherheitsdokument (1, 11, 17) nach Anspruch 1, bei dem die Helligkeit (L*) im Bereich von 0-45 liegt.

3. Sicherheitsdokument (1, 11, 17) nach Anspruch 1 oder 2, bei dem das Muster durch Auftrag von Farbe ausgebildet ist, die Harz, Lösungsmittel und Schuppenpigment in einem Verhältnis von 2-1: 16-8: 3-0,5 (Gewichtsteile) enthält.

4. Sicherheitsdokument (1, 11, 17) nach einem der Ansprüche 1 bis 3, bei dem eine Partikelgröße des Schuppenpigments im Bereich von 1-150 µm liegt.

5. Sicherheitsdokument (1, 11, 17) nach Anspruch 4, bei dem die Partikelgröße im Bereich von 5-60 µm liegt.

6. Sicherheitsdokument (1, 11, 17) nach einem der Ansprüche 1 bis 5, bei dem die Farbe mit dem Verhältnis direkt auf das Basismaterial (4) oder auf die Farbschicht (5) gedruckt ist.

7. Sicherheitsdokument (1, 11, 17) nach einem der Ansprüche 1 bis 6, bei dem die Farbe mit dem Verhältnis über eine durchsichtige oder teildurchsichtige Harzschicht (6) auf die Farbschicht (5) gedruckt ist.

8. Sicherheitsdokument (1, 11, 17) nach einem der Ansprüche 1 bis 7, bei dem die Farbe so gedruckt ist, dass sie eine Linie mit einer Breite im Bereich von 0,01-50 mm bildet.

9. Sicherheitsdokument (1, 11, 17) nach Anspruch 8, bei dem die Linienbreite im Bereich von 0,1-10 mm liegt.

10. Sicherheitsdokument (1, 11, 17) nach einem der Ansprüche 1 bis 9, bei dem die gedruckte Linie ein Unterscheidungselement enthält, das Zeichen, Grafiken, Codes und/oder irgendeine Kombination derselben ist.

11. Sicherheitsdokument (1, 11, 17) nach einem der Ansprüche 1 bis 10, bei dem das Muster durch Differenzieren der Verteilung und/oder Ausrichten der Orientierung des Schuppenpigments ausgebildet ist.

12. Sicherheitsdokument (1, 11, 17) nach Anspruch 1, bei dem das Muster durch Auftrag von Farbe ausgebildet ist, die das in einem Verhältnis von 1-50 Gewichtsprozent, vorzugsweise in einem Verhältnis von 5-30 Gewichtsprozent gemischte Schuppenpigment enthält.

13. Sicherheitsdokument (1, 11, 17) nach Anspruch 12, bei dem eine Partikelgröße des Schuppenpigments im Bereich von 1-150 µm liegt.

14. Sicherheitsdokument (1, 11, 17) nach Anspruch 13, bei dem die Partikelgröße im Bereich von 5-60 µm liegt.

15. Sicherheitsdokument (1, 11, 17) nach einem der Ansprüche 12 bis 14, bei dem die Farbe mit dem Verhältnis direkt auf das Basismaterial (4) oder auf die Farbschicht (5) gedruckt ist.

16. Sicherheitsdokument (1, 11, 17) nach einem der Ansprüche 12 bis 15, bei dem die Farbe so gedruckt ist, dass sie eine Linie mit einer Breite im Bereich von 0,01-50 mm bildet.

17. Sicherheitsdokument (1, 11, 17) nach Anspruch 16, bei dem die Linienbreite im Bereich von 0,1-10 mm liegt.

18. Sicherheitsdokument (1, 11, 17) nach einem der Ansprüche 12 bis 17, bei dem die gedruckte Linie ein Unterscheidungselement enthält, das Zeichen, Grafiken, Codes und/oder irgendeine Kombination derselben ist.

19. Sicherheitsdokument (1, 11, 17) nach einem der Ansprüche 12 oder 18, bei dem das Muster durch Verteilung und/oder Orientieren des Schuppenpigments ausgebildet ist.

## Revendications

1. Document de sécurité (1, 11, 17) avec un motif (2, 12), le motif (2, 12) contenant un pigment écailleux et étant formé sur un matériau de base (4) ou sur une couche colorante (5) qui a une luminance (L*) définie par CIE LAB dans la gamme de 0 à 80.

2. Document de sécurité (1, 11, 17) selon la revendication 1, dans lequel la luminance (L*) est dans la gamme de 0 à 45.

3. Document de sécurité (1, 11, 17) selon la revendication 1 ou 2, dans lequel le motif est formé par une application d'encre contenant une résine, un solvant et un pigment écailleux dans un rapport de 2 à 1 : 16 à 8 : 3 à 0,5 (parties en poids).

4. Document de sécurité (1, 11, 17) selon l'une quelconque des revendications 1 à 3, dans lequel la taille de particules du pigment écailleux est dans la gamme de 1 à 150 µm.

5. Document de sécurité (1, 11, 17) selon la revendication 4, dans lequel ladite taille de particules est dans la gamme de 5 à 60 µm.

6. Document de sécurité (1, 11, 17) selon l'une quelconque des revendications 1 à 5, dans lequel l'encre avec lesdites proportions est directement imprimée sur le matériau de base (4) ou sur la couche colorante (5).

7. Document de sécurité (1, 11, 17) selon l'une quelconque des revendications 1 à 6, dans lequel l'encre avec lesdites proportions est imprimée sur la couche colorante (5) par l'intermédiaire d'une couche de résine transparente ou semi-transparente (6).

8. Document de sécurité (1, 11, 17) selon l'une quelconque des revendications 1 à 7, dans lequel l'encre est imprimée pour former une ligne d'une largeur dans la gamme de 0,01 à 50 mm.

9. Document de sécurité (1, 11, 17) selon la revendication 8, dans lequel ladite largeur de ligne est dans la gamme de 0,1 à 10 mm.

10. Document de sécurité (1, 11, 17) selon l'une quelconque des revendications 1 à 9, dans lequel la ligne imprimée contient un élément de discrimination étant au moins un caractère, un graphique, un code ou toute combinaison de ceux-ci.

11. Document de sécurité (1, 11, 17) selon l'une quelconque des revendications 1 à 10, dans lequel le motif est formé au moins en différenciant la distribution ou en égalisant l'orientation du pigment écailleux.

12. Document de sécurité (1, 11, 17) selon la revendication 1, dans lequel le motif est formé par une application d'encre contenant le pigment écailleux mélangé à raison de 1% à 50% en poids, de préférence à raison de 5% à 30% en poids.

13. Document de sécurité (1, 11, 17) selon la revendication 12, dans lequel la taille de particules du pigment écailleux est dans la gamme de 1 à 150 µm.

14. Document de sécurité (1, 11, 17) selon la revendications 13, dans lequel ladite taille de particules est dans la gamme de 5 à 60 µm.

15. Document de sécurité (1, 11, 17) selon l'une quelconque des revendications 12 à 14, dans lequel l'encre avec lesdites proportions est directement imprimée sur le matériau de base (4) ou sur la couche colorante (5).

16. Document de sécurité (1, 11, 17) selon l'une quelconque des revendications 12 à 15, dans lequel l'encre est imprimée pour former une ligne d'une largeur dans la gamme de 0,01 à 50 mm.

17. Document de sécurité (1, 11, 17) selon la revendication 16, dans lequel ladite largeur de ligne est dans la gamme de 0,1 à 10 mm.

18. Document de sécurité (1, 11, 17) selon l'une quelconque des revendications 12 à 17, dans lequel la ligne imprimée contient un élément de discrimination étant au moins un caractère, un graphique, un code ou toute combinaison de ceux-ci.

19. Document de sécurité (1, 11, 17) selon l'une quelconque des revendications 12 à 18, dans lequel le motif est formé au moins par une distribution ou une orientation du pigment écailleux.
